# FASCICULE DE BREVET EUROPEEN

(11) **EP 0 577 207 B1**
(45) Date de publication et mention de la délivrance du brevet: **11.12.1996**
(21) Numéro de dépôt: 93201850.0
(22) Date de dépôt: 25.06.1993
(51) Int. Cl.: B01D 61/44, C01D 1/38, C25B 1/16

(54) **Procédé de fabrication d'une solution aqueuse d'hydroxyde de sodium**
Verfahren zur Herstellung einer wässrigen Lösung von Natriumhydroxid
Process for the manufacture of an aqueous solution of sodium hydroxide

(30) Priorité: 03.07.1992 BE 9200622
(43) Date de publication de la demande: 05.01.1994
(73) Titulaire: SOLVAY (Société Anonyme), B-1050 Bruxelles (BE)
(72) Inventeur: Bourgeois, Louis, B-1050 Bruxelles (BE)
(74) Mandataire: Anthoine, Paul

(56) Documents cités:
- EP-A- 0 360 093
- EP-A- 0 426 649
- US-A- 4 629 545
- US-A- 4 636 289

## Description

L'invention concerne la fabrication d'hydroxyde de sodium.

Elle concerne plus particulièrement un procédé de fabrication d'une solution aqueuse d'hydroxyde de sodium par électrodialyse.

L'électrodialyse est une technique bien connue pour produire des solutions aqueuses d'hydroxyde de sodium. Ainsi, dans le brevet US-A-4238305, on décrit un procédé dans lequel on met en oeuvre une cellule d'électrodialyse comprenant une alternance de membranes cationiques et de membranes bipolaires, on introduit de l'eau ou une solution aqueuse diluée d'hydroxyde de sodium dans les compartiments délimités entre une membrane cationique et la face anionique d'une membrane bipolaire et on introduit une solution aqueuse de carbonate de sodium dans les compartiments délimités entre une membrane cationique et la face cationique d'une membrane bipolaire. Dans ce procédé connu, on maintient un pH alcalin dans les compartiments qui sont alimentés avec l'eau ou la solution d'hydroxyde de sodium et un pH acide dans les compartiments qui sont alimentés avec la solution de carbonate de sodium. On génère de la sorte du dioxyde de carbone dans les compartiments acides.

Dans ce procédé connu, la génération de dioxyde de carbone dans la cellule d'électrodialyse présente des inconvénients. En effet, les membranes bipolaires utilisées dans ces procédés connus sont formées par accolement d'une membrane anionique et d'une membrane cationique, de sorte que si du dioxyde de carbone se forme dans les pores de la face cationique de la membrane bipolaire, les deux membranes qui la constituent risquent de se désolidariser l'une de l'autre. D'autre part, le gaz ainsi produit soumet les membranes à des efforts mécaniques susceptibles de les détériorer et augmente en outre, de manière significative, la résistance électrique de l'électrolyte et, par voie de conséquence, la consommation électrique.

Dans le brevet US-A-4592817, on décrit un procédé pour la production, par électrodialyse, de carbonate de sodium à partir de trona. Dans ce procédé connu, on évite la formation de dioxyde de carbone dans le compartiment acide de la cellule d'électrodialyse en utilisant, pour alimenter celle-ci, une solution de sulfate de sodium obtenue en décomposant le carbonate de sodium avec une solution d'acide sulfurique. La décomposition du carbonate de sodium étant effectuée en mélangeant le carbonate de sodium à la solution d'acide sulfurique dans un réacteur extérieur à la cellule d'électrodialyse, le dioxyde de carbone formé dans le réacteur ne pénètre pas dans la cellule d'électrodialyse. En pratique toutefois, la mise en oeuvre de ce procédé connu s'est révélée difficile, un dégagement intempestif de dioxyde de carbone dans la cellule d'électrodialyse étant inévitable en cas de décomposition incomplète du carbonate de sodium.

Dans le brevet US-A-4636289, on décrit un procédé pour la valorisation du sodium présent dans des gisements de sesquicarbonate de sodium (du trona ou de la nahcolite, par exemple). Selon ce procédé connu, on décompose le sesquicarbonate de sodium au moyen d'un acide minéral de manière à libérer du dioxyde de carbone, et la solution aqueuse du sel de sodium ainsi formée, exempte de carbonate, est soumise à une électrodialyse.

L'invention vise à remédier aux inconvénients de ces procédés connus, en fournissant un procédé amélioré qui permet de produire une solution aqueuse d'hydroxyde de sodium au départ de carbonate de sodium, dans une cellule d'électrodialyse, sans risquer qu'il se forme du dioxyde de carbone dans la cellule d'électrodialyse.

L'invention concerne dès lors un procédé de fabrication d'hydroxyde de sodium par électrodialyse d'une solution aqueuse d'un sel de sodium dans une cellule d'électrodialyse à membranes bipolaires, selon lequel on met en oeuvre une solution aqueuse d'un sel de sodium dérivé d'un acide dont le pK à 25 °C est inférieur à 6,35, obtenue en faisant circuler une solution aqueuse dudit acide et une solution aqueuse de carbonate de sodium de part et d'autre d'une membrane cationique.

Dans le procédé selon l'invention, l'acide mis en oeuvre doit être un acide qui est hydrosoluble et qui forme un sel hydrosoluble avec le sodium. Il est par ailleurs choisi parmi les acides dont le pK, à 25 °C, est inférieur à 6,35 qui est la valeur généralement admise pour le pK de l'acide carbonique en solution aqueuse à 25 °C (D. D. PERRIN - "Dissociation constants of inorganic acids and bases in aqueous solution" - International Union of Pure and Applied Chemistry - Butterworths - 1969 - page 152). Par la suite, les valeur de pK mentionnées seront considérées comme étant celles de l'acide en solution aqueuse à 25 °C.

Dans le procédé selon l'invention, les acides ayant un pK au maximum égal à 4 sont spécialement recommandés. Il convient d'éviter un acide à constante de dissociation exagérément élevée (pK trop faible), afin de limiter, pendant l'électrodialyse, le passage de protons dans la solution aqueuse d'hydroxyde de sodium à produire. A cet effet, on recommande de sélectionner l'acide parmi ceux dont le pK est supérieur à 0, de préférence au moins égal à 1. Des acides préférés sont ceux ayant un pK de 1 à 3.

L'acide peut être indifféremment un acide inorganique ou un acide organique. On préfère sélectionner un acide inorganique tel que, par exemple l'acide sulfurique ou l'acide phosphorique. Bien que l'acide sulfurique (pK = 1,96) convienne bien, on donne la préférence à l'acide phosphorique (pK = 2,15).

L'origine de la solution de carbonate de sodium n'est pas critique. Elle peut par exemple être obtenue par dissolution de carbonate de sodium anhydre dans de l'eau. En variante, on peut également la fabriquer par dispersion de sesquicarbonate de sodium dans de l'eau, par exemple du sesquicarbonate extrait d'un gisement de trona, la dispersion étant éventuellement suivie d'une filtration pour éliminer les matières insolubles, notamment le bicarbonate de sodium.

La solution d'acide et la solution de carbonate de sodium peuvent être des solutions diluées ou des solutions concentrées. On préfère les solutions concentrées. Les concentrations respectives des deux solutions doivent toutefois être compatibles avec la solubilité des produits formés dans le réacteur (notamment du bicarbonate de sodium et du sel de sodium de l'acide), pour éviter qu'il s'y forme des précipités solides. En pratique, les concentrations optimum des deux solutions vont dès lors dépendre de divers paramètres, notamment de la température, de la nature de la membrane et de l'acide sélectionné. Elles peuvent être déterminées dans chaque cas particulier par un travail de routine au laboratoire. Pour ce qui concerne la solution de carbonate de sodium, des concentrations pondérales d'au moins 10 % en carbonate de sodium à 20 °C conviennent généralement bien. La concentration optimum de la solution d'acide va évidemment dépendre de l'acide sélectionné. Pour des solutions à 20 °C, elle est avantageusement d'au moins 10 % en poids dans le cas d'une solution d'acide sulfurique et d'au moins 4 % en poids dans le cas d'une solution d'acide orthophosphorique. Dans le cas où l'électrodialyse est effectuée à haute température, les concentrations respectives de la solution de carbonate de sodium et de la solution d'acide peuvent être plus élevées. Par exemple, dans le cas d'une température d'au moins 50 °C, la solution de carbonate de sodium peut avantageusement avoir une teneur pondérale d'au moins 12 % en carbonate de sodium, et la solution d'acide peut avantageusement avoir une teneur pondérale en acide d'au moins 20 % (dans le cas où l'acide sélectionné est l'acide sulfurique) ou 10 % (dans le cas où l'acide sélectionné est l'acide orthophosphorique).

Conformément à l'invention, on fait circuler la solution de carbonate de sodium et la solution d'acide de pK inférieur à 6,35 respectivement de part et d'autre d'une membrane cationique, de manière à réaliser, par dialyse à travers la membrane cationique, une migration d'ions sodium de la solution de carbonate de sodium vers la solution d'acide et une migration de protons de la solution d'acide vers la solution de carbonate de sodium. La dialyse est une technique bien connue en soi et les conditions opératoires optimum à mettre en oeuvre dans le procédé selon l'invention peuvent être déterminées aisément par un travail de routine au laboratoire (Journal of Membrane Science, 48 (1990), Elsevier Science Publishers B.V., Amsterdam, pages 155-179, Eleanor H. CWIRKO & Ruben G. CARBONNEL : "A theoretical analysis of Donnan dialysis across charged porous membranes"). On recueille ainsi de la dialyse une solution aqueuse du sel de sodium de l'acide de pK inférieur à 6,35, qui est exempte de carbonate de sodium. Elle est envoyée, conformément à l'invention, dans la cellule d'électrodialyse.

Au cours de l'électrodialyse, on alimente la cellule d'électrodialyse, d'une part avec la solution du sel de sodium de l'acide de pK inférieur à 6,35 et, d'autre part, avec de l'eau ou une solution aqueuse diluée d'hydroxyde de sodium. On entend désigner par solution aqueuse diluée d'hydroxyde de sodium, une solution non saturée. La concentration en hydroxyde de sodium de la solution aqueuse est conditionnée par la nécessité d'éviter une détérioration des membranes par l'hydroxyde de sodium. A cet effet, on préconise de sélectionner une concentration en hydroxyde de sodium inférieure à 10 moles/l, de préférence à 5 moles/l, les concentrations n'excédant pas 2,5 moles/l étant spécialement recommandées. En pratique, on obtient de bons résultats en sélectionnant des solutions aqueuses dont la concentration en hydroxyde de sodium est supérieure à 0,2 mole/l, de préférence au moins égale à 0,5 mole/l, les concentrations préférées se situant entre 1 et 2 moles/l.

L'électrodialyse peut être exécutée dans toute cellule d'électrodialyse à membranes bipolaires communément utilisée pour la production de solutions aqueuses d'hydroxyde de sodium, par exemple une cellule du type à deux compartiments ou une cellule du type à trois compartiments telles que celles décrites dans les brevets US-A-4238305 et US-A-4592817.

Dans une forme de réalisation avantageuse du procédé selon l'invention, on met en oeuvre une cellule d'électrodialyse comprenant, entre une anode et une cathode, au moins deux compartiments délimités respectivement entre une membrane cationique et deux membranes bipolaires qui sont disposées de part et d'autre de la membrane cationique et qui ont chacune une face anionique orientée vers l'anode, on introduit la solution aqueuse du sel de sodium dans celui des deux compartiments, qui est le plus proche de l'anode et on introduit de l'eau ou une solution aqueuse diluée d'hydroxyde de sodium dans l'autre compartiment.

On entend désigner par membrane cationique une feuille mince, non poreuse, sélectivement perméable aux cations et imperméable aux anions. Les membranes cationiques utilisables dans le procédé selon l'invention doivent être en une matière inerte vis-à-vis des solutions aqueuses d'hydroxyde de sodium. Des membranes cationiques utilisables dans le procédé selon l'invention sont par exemple des feuilles en polymère fluoré contenant des groupements fonctionnels cationiques dérivés d'acides sulfoniques, d'acides carboxyliques ou d'acides phosphoniques ou des mélanges de tels groupements fonctionnels. Des exemples de membranes de ce type sont celles décrites dans les brevets GB-A-1497748 (ASAHI KASEI KOGYO K.K.), GB-A-1522877 (ASAHI GLASS COMPANY LTD) et GB-A-1402920 (DIAMOND SHAMROCK CORP.). Des membranes particulièrement adaptées à cette application de la cellule selon l'invention sont celles connues sous les marques "NAFION" (DU PONT) et "FLEMION" (ASAHI GLASS COMPANY LTD).

Les membranes bipolaires sont des membranes qui présentent, sur une face, les propriétés d'une membrane cationique et, sur l'autre face, les propriétés d'une membrane anionique, une membrane anionique étant, par définition, une feuille mince, non poreuse, sélectivement perméable aux anions et imperméable aux cations. Les membranes bipolaires peuvent généralement être obtenues par accolement d'une membrane cationique et d'une membrane anionique en exploitant par exemple, à cet effet, les techniques décrites dans la demande de brevet britannique GB-A-2122543 et dans la demande internationale de brevet WO 89/1059 (toutes deux au nom de UNISEARCH LTD). Des membranes anioniques utilisables dans la confection des membranes bipolaires utilisables dans le procédé selon l'invention sont des feuilles en un matériau polymérique inerte vis-à-vis des solutions aqueuses d'hydroxyde de sodium et comprenant des groupements d'ammonium quaternaire jouant le rôle de sites anioniques fixes.

Dans la pratique, les membranes cationiques ne sont pas idéalement imperméables aux anions et les membranes anioniques ne sont pas idéalement imperméables aux cations. Par définition, le rendement de courant d'une membrane cationique est la fraction molaire du cation qui traverse effectivement la membrane sous l'action d'un Faraday. De manière similaire, le rendement de courant d'une membrane anionique est la fraction molaire de l'anion qui traverse effectivement la membrane sous l'action d'un Faraday.

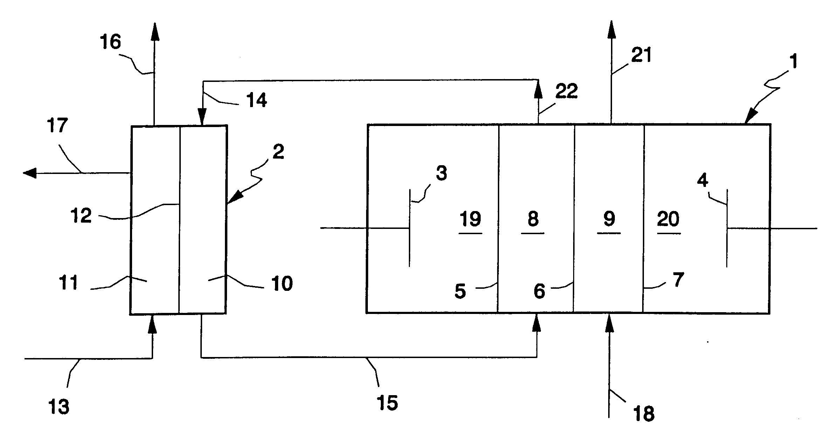

Des particularités et détails de l'invention vont ressortir de la description suivante de la figure unique du dessin annexé, qui représente schématiquement une installation pour la mise en oeuvre d'une forme de réalisation particulière du procédé selon l'invention.

L'installation représentée à la figure comprend une cellule d'électrodialyse 1 et un réacteur à dialyse 2.

La cellule d'électrodialyse 1 est du type à deux compartiments. Elle comprend successivement, entre une anode 3 et une cathode 4, une membrane bipolaire 5, une membrane cationique 6 et une seconde membrane bipolaire 7. Les membranes bipolaires 5 et 7 sont disposées dans la cellule de manière qu'elles aient leur face anionique orientée vers l'anode. Les membranes 5, 6 et 7 délimitent ainsi dans la cellule deux compartiments 8 et 9.

En pratique, les cellules d'électrodialyse industrielles comprennent un grand nombre (généralement plusieurs dizaines) de compartiments tels que 8 et 9.

Le réacteur 2 comprend une enceinte divisée en deux chambres 10 et 11 par une membrane cationique 12.

Pendant l'exploitation de l'installation représentée à la figure, on fait circuler une solution aqueuse de carbonate de sodium 13 dans la chambre 11 du réacteur 2. Simultanément, on fait circuler une solution aqueuse d'acide phosphorique 14 dans la chambre 10 du réacteur 2. La solution aqueuse d'acide phosphorique peut éventuellement contenir du phosphate de sodium. Pendant la circulation des deux solutions 13 et 14 dans le réacteur 2 des cations sodium migrent de la chambre 11 dans la chambre 10 à travers la membrane cationique 12; simultanément, des protons migrent de la chambre 10 dans la chambre 11 à travers la membrane 12, de manière à maintenir l'équilibre ionique des solutions dans les deux chambres. On recueille une solution aqueuse de phosphate de sodium 15 de la chambre 10 et du dioxyde de carbone 16 et une solution aqueuse de bicarbonate de sodium 17 de la chambre 11.

La solution aqueuse de phosphate de sodium 15 est introduite dans le compartiment 8 de la cellule d'électrodialyse 1. Simultanément, on introduit de l'eau (ou une solution diluée d'hydroxyde de sodium) 18 dans le compartiment 9 de la cellule. Dans les compartiments d'extrémité 19 et 20 contenant les électrodes 3 et 4, on fait circuler un électrolyte aqueux dont la composition n'est pas critique. Sous l'effet de la différence de potentiel entre les électrodes 3 et 4, il y a dissociation d'eau sur les membranes bipolaires 5 et 7, donnant lieu à la formation de protons dans le compartiment 8 et d'ions hydroxyle dans le compartiment 9. Simultanément, des cations sodium migrent du compartiment 8 dans le compartiment 9 en traversant la membrane cationique 6. Il y a de la sorte formation d'hydroxyde de sodium dans le compartiment 9 et d'acide phosphorique dans le compartiment 8. On recueille dès lors une solution aqueuse d'hydroxyde de sodium 21 du compartiment 9 et une solution aqueuse 22 d'acide phosphorique, du compartiment 8. La solution 22 (qui peut habituellement contenir du phosphate de sodium dissous) peut être recyclée dans le réacteur 2, où elle constitue alors la solution 14 d'acide phosphorique de départ.

La solution aqueuse 21 d'hydroxyde de sodium peut être valorisée telle quelle. En variante, on peut au préalable la soumettre à une évaporation partielle pour la concentrer en hydroxyde de sodium.

Le dioxyde de carbone recueilli du réacteur 2 peut par exemple être valorisé dans une soudière à l'ammoniaque.

La solution aqueuse de bicarbonate de sodium 17 recueillie de la chambre 11 du réacteur 2 peut être soumise à une évaporation pour cristalliser du bicarbonate de sodium valorisable tel quel. En variante, on peut l'envoyer dans une soudière à l'ammoniaque.

## Revendications

1. Procédé de fabrication d'une solution aqueuse d'hydroxyde de sodium par électrodialyse d'une solution aqueuse d'un sel de sodium dans une cellule d'électrodialyse à membranes bipolaires, selon lequel on met en oeuvre une solution aqueuse d'un sel de sodium dérivé d'un acide dont le pK, à 25 °C, est inférieur à 6,35, caractérisé en ce que la solution aqueuse du sel de sodium est obtenue en faisant circuler une solution aqueuse de l'acide susdit et une solution aqueuse de carbonate de sodium de part et d'autre d'une membrane cationique.

2. Procédé selon la revendication 1, caractérisé en ce qu'on sélectionne l'acide parmi ceux dont le pK est au maximum égal à 4.

3. Procédé selon la revendication 2, caractérisé en ce qu'on sélectionne l'acide parmi ceux ayant un pK de 1 à 3.

4. Procédé selon l'une quelconque des revendications 1 à 3, caractérisé en ce qu'on sélectionne l'acide parmi les acides inorganiques.

5. Procédé selon la revendication 4, caractérisé en ce que l'acide sélectionné est l'acide phosphorique.

6. Procédé selon l'une quelconque des revendications 1 à 5, caractérisé en ce que la solution aqueuse d'acide est une solution que l'on recueille de l'électrodialyse.

7. Procédé selon l'une quelconque des revendications 1 à 6, caractérisé en ce que la solution aqueuse de carbonate de sodium est obtenue en dissolvant du sesquicarbonate de sodium dans de l'eau.

8. Procédé selon l'une quelconque des revendications 1 à 7, caractérisé en ce que la cellule d'électrodialyse (1) comprend, entre une anode (3) et une cathode (4), au moins deux compartiments (8, 9) délimités respectivement entre une membrane cationique (6) et deux membranes bipolaires (5, 7) qui sont disposées de part et d'autre de la membrane cationique (6) et qui ont chacune une face anionique orientée vers l'anode, on introduit la solution aqueuse du sel de sodium (15) dans celui des deux compartiments, qui est le plus proche de l'anode et on introduit de l'eau ou une solution aqueuse diluée d'hydroxyde de sodium (18) dans l'autre compartiment.

9. Procédé selon la revendication 8, caractérisé en ce que la solution d'acide est une solution aqueuse que l'on recueille du compartiment (8) alimenté avec la solution aqueuse du sel de sodium.

## Claims

1. Process for the manufacture of an aqueous solution of sodium hydroxide by electrodialysis of an aqueous solution of a sodium salt in an electrodialysis cell containing bipolar membranes, according to which use is made of an aqueous solution of a sodium salt derived from an acid whose pK at 25°C is lower than 6.35 characterised in that the aqueous solution of the sodium salt is obtained by circulating an aqueous solution of the said acid and an aqueous solution of sodium carbonate on either side of a cationic membrane.

2. Process according to Claim 1, characterised in that the acid is chosen from those whose pK does not exceed 4.

3. Process according to Claim 2, characterised in that the acid is chosen from those which have a pK of 1 to 3.

4. Process according to any one of Claims 1 to 3, characterised in that the acid is chosen from inorganic acids.

5. Process according to Claim 4, characterised in that the acid chosen is phosphoric acid.

6. Process according to any one of Claims 1 to 5, characterised in that the aqueous solution of acid is a solution which is collected from the electrodialysis.

7. Process according to any one of Claims 1 to 6, characterised in that the aqueous solution of sodium carbonate is obtained by dissolving sodium sesquicarbonate in water.

8. Process according to any one of Claims 1 to 7, characterised in that the electrodialysis cell (1) comprises, between an anode (3) and a cathode (4), at least two compartments (8, 9) bounded respectively between a cationic membrane (6) and two bipolar membranes (5, 7) which are arranged on either side of the cationic membrane (6) and each of which has an anionic face directed towards the anode, the aqueous solution of the sodium salt (15) is introduced into that of the two compartments which is closer to the anode, and water or a dilute aqueous solution of sodium hydroxide (18) is introduced into the other compartment.

9. Process according to Claim 8, characterised in that the acid solution is an aqueous solution which is collected from the compartment (8) fed with the aqueous solution of the sodium salt.

## Patentansprüche

1. Verfahren zur Herstellung einer wäßrigen Natriumhydroxidlösung durch Elektrodialyse einer wäßrigen Lösung eines Natriumsalzes in einer Elektrodialysezelle mit bipolaren Membranen, gemäß dem man eine wäßrige Lösung eines Natriumsalzes, das von einer Säure, deren pK bei 25 °C kleiner als 6,35 ist, abgeleitet ist, verwendet, dadurch gekennzeichnet, daß die wäßrige Lösung des Natriumsalzes dadurch erhalten wird, daß man eine wäßrige Lösung der oben genannten Säure und eine wäßrige Natriumcarbonatlösung auf beiden Seiten einer kationischen Membran zirkulieren läßt.

2. Verfahren gemäß Anspruch 1, dadurch gekennzeichnet, daß man die Säure unter denjenigen auswählt, deren pK höchstens gleich 4 ist.

3. Verfahren gemäß Anspruch 2, dadurch gekennzeichnet, daß man die Säure unter denjenigen mit einem pK von 1 bis 3 auswählt.

4. Verfahren gemäß einem der Ansprüche 1 bis 3, dadurch gekennzeichnet, daß man die Säure unter den anorganischen Säuren auswählt.

5. Verfahren gemäß Anspruch 4, dadurch gekennzeichnet, daß die ausgewählte Säure Phosphorsäure ist.

6. Verfahren gemäß einem der Ansprüche 1 bis 5, dadurch gekennzeichnet, daß die wäßrige Säurelösung eine Lösung ist, die man aus der Elektrodialyse gewinnt.

7. Verfahren gemäß einem der Ansprüche 1 bis 6, dadurch gekennzeichnet, daß die wäßrige Natriumcarbonatlösung durch Auflösen von Natriumsesquicarbonat in Wasser erhalten wird.

8. Verfahren gemäß einem der Ansprüche 1 bis 7, dadurch gekennzeichnet, daß die Elektrodialysezelle (1) zwischen einer Anode (3) und einer Kathode (4) wenigstens zwei Abteile (8, 9) umfaßt, die von einer kationischen Membran (6) beziehungsweise zwei bipolaren Membranen (5, 7), die auf beiden Seiten der kationischen Membran (6) angeordnet sind und die beide eine zur Anode gerichtete anionische Seite besitzen, begrenzt sind, man die wäßrige Natriumsalzlösung (15) in dasjenige der beiden Abteile gibt, das am nächsten zur Anode ist, und man Wasser oder eine verdünnte wäßrige Natriumhydroxidlösung (18) in das andere Abteil gibt.

9. Verfahren gemäß Anspruch 8, dadurch gekennzeichnet, daß die Säurelösung eine wäßrige Lösung ist, die man aus dem mit der wäßrigen Natriumsalzlösung gespeisten Abteil (8) gewinnt.
